# EUROPÄISCHE PATENTSCHRIFT

(11) **EP 3 167 202 B1**
(45) Veröffentlichungstag und Bekanntmachung des Hinweises auf die Patenterteilung: **13.03.2019**
(21) Anmeldenummer: 15735675.9
(22) Anmeldetag: 07.07.2015
(51) Int. Cl.: F16D 65/18

(54) **FÜHRUNGSSYSTEM FÜR EINEN BREMSKOLBEN EINER KRAFTFAHRZEUGSCHEIBENBREMSE**
GUIDING SYSTEM FOR A BRAKE PISTON OF A MOTOR-VEHICLE DISK BRAKE
SYSTÈME DE GUIDAGE D'UN PISTON DE FREIN D'UN FREIN À DISQUE DE VÉHICULE AUTOMOBILE

(30) Priorität: 07.07.2014 DE 102014213153; 24.09.2014 DE 102014219334
(43) Veröffentlichungstag der Anmeldung: 17.05.2017
(73) Patentinhaber: Continental Teves AG & Co. OHG, 60488 Frankfurt am Main (DE)
(72) Erfinder: VOGT, Michael, 55469 Simmern (DE); GÄDKE, Martin, 65719 Hofheim/TS (DE); SCHUCHARD, Alexander, 35099 Burgwald (DE); ZIMNOCH, Frederic, 64380 Rossdorf (DE); MARSCHNER, Holger, 61440 Oberursel (DE); MÜLLER, Reiner, 65795 Hattersheim 1 (DE); HAAG, Mathias, 64289 Darmstadt (DE); UNGETHÜM, Ulrich, 63179 Obertshausen (DE); BACH, Uwe, 65527 Niedernhausen (DE); RITTER, Wolfgang, 61440 Oberursel/TS (DE); RAUSCH, Jochem, 55270 Essenheim (DE)
(86) Internationale Anmeldenummer: PCT/EP2015/065448
(87) Internationale Veröffentlichungsnummer: WO 2016/005372

(56) Entgegenhaltungen:
- WO-A1-2010/031512
- DE-A1- 3 405 028
- DE-A1-102008 051 118
- US-A- 3 421 604

## Beschreibung

Die Erfindung betrifft ein Führungssystem für einen Bremskolben einer Kraftfahrzeugscheibenbremse umfassend einen Bremskolben, eine zylindrische Bremskolbenbohrung zur axial relativverschiebbaren Aufnahme vom Bremskolben in einem Gehäuse, und ein Führungsmittel, das elastisch zwischen einer zylindrischen Bremskolbenwandung und einer Nut in der Bremskolbenbohrung eingespannt ist.

Bei den bekannten Kraftfahrzeugbremsen erfolgt eine systematische Aufgabentrennung, indem die mechanische Abstützung von Kräften also die Linearführung von dem Bremskolben im Gehäuse durch direkte Anlage anhand einer definierten mechanisch feinbearbeiteten zylindrischen Passung der gepaarten Bauteildurchmesser, also zwischen zylindrischer Bremskolbenwandung und zylindrischer Bremskolbenbohrungswandung, wahrgenommen wird. Eine elastische Ringdichtung ist nach dem Plungerprinzip im Gehäuse aufgenommen und sitzt von radial außen elastisch sowie zentrisch auf der Bremskolbenwandung auf, um eine hydraulische Abdichtfunktion und nach einer Bremsbetätigung eine sogenannte Roll-Back-Funktion wahrzunehmen. Durch die Roll-Back-Funktion wird bei den Festsattelbremsen ausschließlich ein Bremskolben zurück geschoben. Bei Faustsattelbremsen bezieht sich diese Rückstellung sowohl auf den Bremskolben als auch zusätzlich auf das Gehäuse.

Auf Seite 98 von der 3. Auflage (2006) des Bremsenhandbuch - ISBN -10 3-8348-0064-3 ist jeweils schematisch die prinzipielle Funktion einer konventionellen Faustsattelbremse und auf der Seite 95 die Wirkungsweise einer konventionellen Ringdichtung zum Einsatz bei Kraftfahrzeugscheibenbremsen beschrieben. Der Bremskolben wird nach dem Lösen einer Bremsbetätigung im drucklosen Zustand infolge elastischer Rückverformung der Ringdichtung, wobei deren Wandung unter Kraftschluss an der Bremskolbenwandung angreift, selbsttätig zurückgezogen (Roll-back-Verhalten). Demzufolge prägt die rückverformende Ringdichtung dem Bremskolben sowie dem Gehäuse die besagte Rückstellwirkung auf.

Aus der DE 16 00 008 A1 ist es bekannt, das genannte selbsttätige Rückstellverhalten durch Verringern vom Reibungskoeffizienten zwischen Bremskolbenbohrung und Bremskolbenwandung zu beeinflussen. Dazu wird vorgeschlagen, zumindest die Bremskolbenwandung selbstschmierend aus Kohle bzw. Graphit herzustellen. Dies erfordert aufwändige Sonderprozesse, ist verschleißbehaftet, und der Bremskolben arbeitet hinsichtlich seiner thermischen und mechanischen Eigenschaften leider nicht in allen Anwendungsfällen zufriedenstellend.

Der DE 38 00 679 A1 ist eine Dichtvorrichtung zu entnehmen, wobei eine Oberfläche zur Verminderung eines Stick-Slip-Effektes aufgeraut ist. Untersuchungen haben ergeben, dass durch Einsatz einer derart mikrostrukturiert ausgebildeten Oberfläche (im Gegensatz zu einer völlig glatten Oberfläche) eine dünne Flüssigkeitsbenetzung zwischen Bremskolben und Ringdichtung aufrechterhalten werden kann, so das Stick-Slip vermieden wird. Nachdem die Ringdichtung infolge flüssiger Benetzung und Niedrigreibwert wenig Angriff oder Widerstand zwecks Kraftübertragung auf den Bremskolben findet, ist auch das Roll-Back-Verhalten reduziert ausgeprägt. Dies kann sich bei Faustsattelbremsen nachteilig auswirken.

Aus der DE 103 53 827 A1 geht eine Ringdichtung mit wenigstens einer umlaufend ringförmig rillierten Lauffläche zur Anlage an der Bremskolbenwandung hervor. Dabei verläuft die Rillierung rechtwinklig-quer zu einer Bremskolbenachse.

Zur Wirkungsgradverbesserung ist aus der DE 197 49 612 C2 eine Festsattelbremse mit Bremskolben-Zylindereinheit und mit einem Taumelgelenk für den Bremskolben bekannt. Zur Ausbildung vom Taumelgelenk nimmt der Bremskolben eine elastische Dichtung auf. Der Bremskolben ist durch die Dichtung zentrisch in einer Kolbenbohrung aufgenommen sowie biegeweich und verschiebbar gelagert. Dadurch kann sich eine Bremskolbenachse unter Druck im Bremsbetrieb orthogonal zu einer Rückseite von einem Bremsklotz ausrichten. Dabei ist die Ausrichtung zwangsläufig abhängig von einer elastischen Gehäusedeformation unter einem wachsenden Bremsdruck. Der Bremskolben ist durch die Dichtung radialsymmetrisch eingespannt (symmetrische Einspannung).

Neuere Modalanalyse in Sachen NVH (NVH=Noise-Vibration-Harshness) bei Scheibenbremsen konzentriert sich im Wesentlichen auf Vermeidung von hochfrequent geräuschbedingten Komfortbeeinträchtigungen. Ein Ergebnis dieser Forschung besteht darin, dass bei gegenwärtiger Spezifikation sowie Lastenheft einer Scheibenbremse eine nachträgliche Detailoptimierung in der Regel nicht mehr ausreicht, um eine bleibende Verbesserung zu erzielen. Es ist daher eine Aufgabe der vorliegenden Erfindung, eine verbesserte, übergeordnete, kurz systematisch-prinzipielle, Verbesserung von NVH- sowie Roll-Back-Eigenschaften in sämtlichen Betriebszuständen, also auch in einem drucklosen Zustand, vom schwingenden System zu ermöglichen, ohne bisher günstige Wirkungen in Frage zu stellen.

Zur Lösung des Problems wird bei einem gattungsgemäßen Führungssystem nach dem Oberbegriff vom Patentanspruch 1 eine Merkmalskombination nach dem Kennzeichen vom Patentanspruch 1 vorgeschlagen. Erfindungsgemäß wird die Bremskolbenführung erstmals als modalakustisch relevantes und in besonderer Form "ge- und verstimmbares" Teilsystem eines Kraftfahrzeugbremssystems verstanden. Durch besondere Kombination der Randbedingungen zwischen Bremskolbenbohrung und Bremskolbenwandung wird das Führungsmittel derart reversibel elastisch "verstimmt" eingespannt, dass das Führungsmittel am Bremssattelgehäuse abgestützt ist, und den Bremskolben permanent mit einer definierten Querkraftwirkung beaufschlagt, so dass die Bremskolbenwandung mit der Bohrungswandung nach Bedarf dosiert, also gesteuert, modalakustisch gekoppelt ist. Erfindungsgemäß wird durch das neuartige Führungsmittel also eine modalakustisch "exzentrische" Verstimmung innerhalb der Kolbenaufnahme zwischen Bremskolbenwandung und Bohrung vorgenommen. Demzufolge verfügt das Führungsmittel/Ringdichtung erstmals über eine Doppelfunktion dergestalt, dass nicht nur die bekannte Abdichtungsfunktion sondern gleichzeitig eine Querkraftmodulationsfunktion (bezogen auf den Bremskolben) wahrgenommen und ausgeübt wird. Mit Vorteil wird erfindungsgemäß erstmals vorgeschlagen, Abstand von einer rein radialsymmetrischen Dichtungseinspannung eines Bremskolbens zu nehmen, indem dem Bremskolben über die Dichtung eine definierte, und am Umfang asymmetrisch modulierte, Querkraft aufgeprägt wird, was für den Kolben in Querrichtung eine definierte Vorzugsorientierung und/oder einen definierten Anstellwinkel erzeugt. Demzufolge werden Hysteresefehler in dem Bremskolbenrückstellverhalten, Bremskolbenklemmen, unerwünschte Verdrehung vom Bremskolben, Restbremsmomente, spürbare Unstetigkeit in einer Bremspedalbetätigung sowie unerwünschte Schwingungsgeräusche anhand neuartiger Aufnahme durch die besondere Einspannung und modalakustische Entkopplung vom Bremskolben vermieden. Auch wird das System standardisiert und vereinfacht, weil dessen Führungsfunktion im Wesentlichen durch standardisierte Gleichteile wahr-genommen wird.

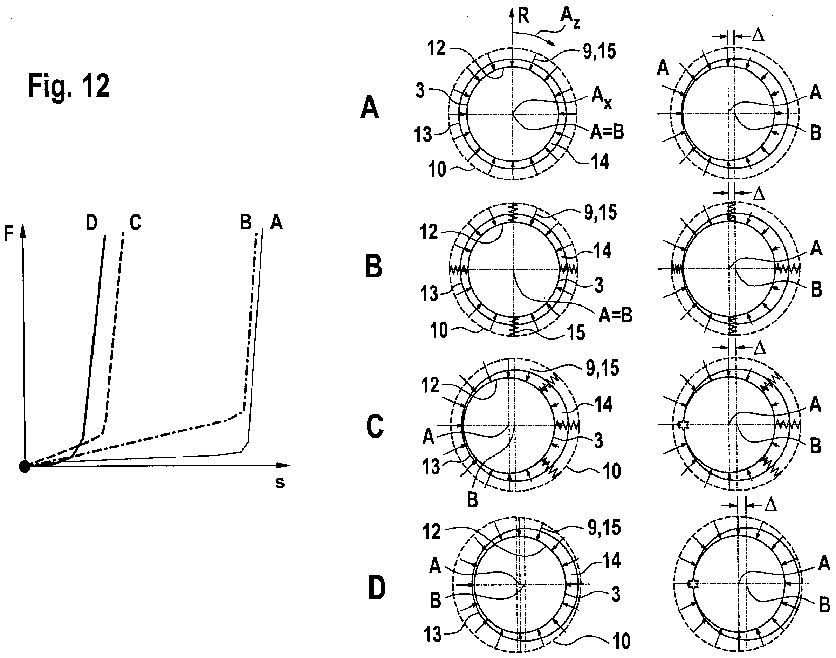

Die Erfindung ermöglicht es, einen Bremskolben durch gezielt asymmetrische elastische Einspannung in sämtlichen Betriebszuständen bedarfsgerecht und günstig zu entkoppeln. Also wird dem Kolben eine gezielte Orientierung, Deaxierung und/oder ein definierter Anstellwinkel α erteilt, wobei die Bremskolbenachse sogar in drucklosem Zustand deaxiert und/oder schräg zur Kolbenbohrung arrangiert sein kann. Insbesondere mit einer gezielt dezentralisierten, also asymmetrisch sowie elastisch querverspannten, Kolbenaufnahme im Gehäuse wird es mit verhältnismäßig einfachen Mitteln ermöglicht, einem Kolben in Querrichtung veränderliche Vorzugsorientierungen aufzuprägen und/oder ggf. die Bremskolbenachse schiefwinklig im Gehäuse zu arrangieren. Dies hat wiederum die positive Folge, dass mittels akustischer Verstimmung unerwünschte Komfortbeeinträchtigung vermieden werden kann. All dies erfolgt sehr kostengünstig bei konventionell-orthogonal gespanten Kolbenbohrungen im Gehäuse sowie in betätigtem als auch in unbetätigtem Betriebszustand. Nachdem gemäß Fig. 12 ganz unterschiedlich wirksame und primär mechanisch ausgeprägte Lösungsalternativen zur Querkraftmodulation identifiziert sind (A = modulierter Dichtungselastizitätsmodul, B = besonderes Führungsmittel, C = besonderes exzentrisches Führungsmittel, D = exzentrische Ausnehmung/Nut für Führungsmittel) können deren Merkmale jeweils für sich in Alleinstelllung oder in beliebiger Kombination miteinander verknüpft vorgesehen sein, ohne die Erfindung zu verlassen.

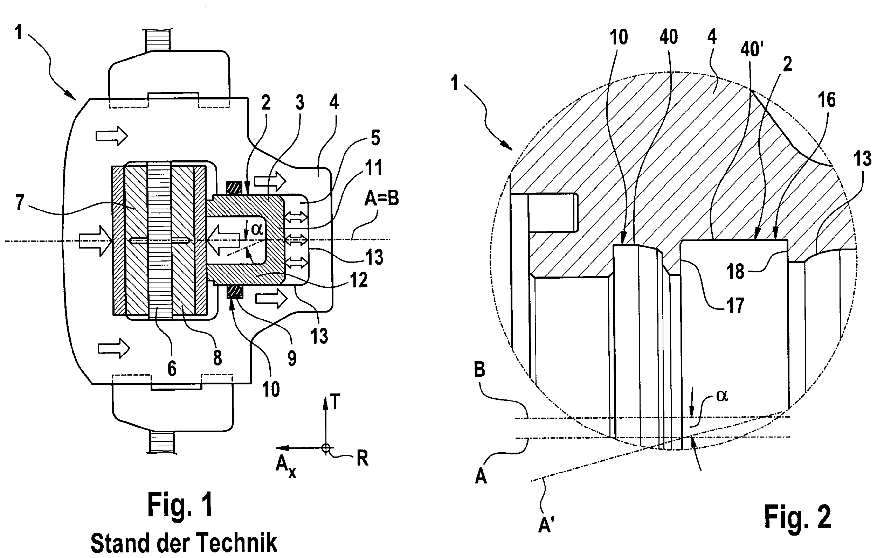

Weitere Einzelheiten der Erfindung gehen aus Unteransprüchen im Zusammenhang mit der Beschreibung anhand der Zeichnung gemäß Fig. 1-12 hervor.
Fig. 1 verdeutlicht schematisch eine Faustsattelbremse,
Fig. 2 zeigt vergrößert einen Teil von einer erfindungsgemäßen Bremskolbenbohrung einschließlich Aufnahme für ein Führungsmittel in einem Gehäuse,
Fig. 3-5 zeigt eine erste Ausführungsform von einem Führungsmittel in unterschiedlichen Ansichten,
Fig. 6 + 7 zeigt eine zweite Ausführungsform von einem Führungsmittel in unterschiedlichen Ansichten,
Fig. 8 zeigt eine Einzelheit einer Einbausituation vom Führungsmittel nach Fig. 6-7 in einem Gehäuse,
Fig. 9 + 10 zeigt eine dritte Ausführungsform von einem Führungsmittel in unterschiedlichen Ansichten,
Fig. 11 verdeutlicht Einzelheiten einer Einbausituation vom Führungsmittel nach Fig. 9+10 in einer Bremskolbenbohrung von einem Gehäuse,
Fig. 12 eine qualitativer Vergleich zur Kraftwirkung F der Kolbeneinspannung in Bezug auf die Kolbenverschiebung s unter Anwendung der unterschiedlichen Konfigurationen, nämlich gemäß a) konventionelles, starres Kolben-Führungssystem, b) zusätzlich entkoppelndes, zentrisch vorspannendes Führungselement, c) exzentrisch vorspannendes, exzentrisches Führungselement, und d) deaxierte Nut zwischen Führungselement und/oder Dichtring, und Fig. 13 eine bevorzugte Ausführungsform der Erfindung, mit deaxierter Nut sowie besonderem Nutprofil, und
Fig. 14 eine Doppelkolbenapplikation von der Ausführungsform nach Fig. 13.

Die Erfindung wird nachfolgend anhand von den verschiedenen Ausführungsbeispielen im Zusammenhang mit der Zeichnung näher erläutert.

Jeder hydraulische Aktuator wie insbesondere eine Kraftfahrzeugscheibenbremse 1 umfasst wenigstens ein Führungssystem 2 für wenigstens einen translatorisch verschiebbaren Bremskolben 3 der in einem Gehäuse 4, wie insbesondere in einem Bremssattel oder Zylinder, aufgenommen ist. Dabei kann sich die Erfindung gleichermaßen sowohl auf die Führungssysteme der Bremskolben von Geberaktuatoren (also beispielsweise hydraulische Hauptbremszylinder) oder die Führungssysteme für Bremskolben von Nehmeraktuatoren (also beispielsweise hydraulische Kraftfahrzeugscheibenbremsen) beziehen. Hauptbremszylinder umfassen meist zwei hydraulisch unabhängig voneinander geschaltete, translatorisch in einer Bohrung verschieblich aufgenommene, Bremskolben (Primär- und Sekundärkolben), welche als verschiebbare Wand Druckräume begrenzen, die mit Druckräumen von zugeordneten Kraftfahrzeugscheibenbremsen verbunden sind, die ihrerseits von Bremskolben begrenzt sind. In einer Kraftfahrzeugscheibenbremse 1 vom Faustsatteltyp begrenzt wenigstens ein Bremskolben 3 einen Druckraum 5, welcher von einem hydraulisch vorgeschalteten Geber-Aktuator betätigt wird. Kraftfahrzeugscheibenbremsen 1 vom Festsatteltyp umfassen jedoch wenigstens einen Bremskolben 3 auf jeder Seite einer Bremsscheibe 6.

Bei Betätigung durch einen Geber wird in jedem volumetrisch geschlossenen hydraulischen System (Geber, Rohrleitungen, Bremsschlauchleitungen, Kraftfahrzeugscheibenbremse 1, Bremskolben 3) nach dem Gesetzt der Volumenkonstanz inkompressible Bremsflüssigkeit derart mit Flüssigkeitsdruck beaufschlagt, dass wenigstens ein Reibbelag 7,8 nach Überwindung eines sogenannten Lüftspiels direkt oder indirekt vom Bremskolben 3 gegen einen Rotor (Bremsscheibe 6) gepresst wird. Als Maß für diese Bremswirkung dient eine Flächenpressung (vgl. Bremsdruck), welche mit einer bestimmten Zuspannkraft korreliert. Zum Lüften der Kraft-fahrzeugscheibenbremse 1 ist der Geber gelüftet, unbetätigt. Die Ringdichtung 9 ist in einer Ausnehmung/Nut 10 aufgenommen. Für die Rückstellung vom Bremskolben 3 wird die Elastizität und elastische Roll-Back-Wirkung der Ringdichtung 9 ausgenutzt. Demzufolge wird das gewünschte Lüftspiel nach einer Bremsung im Wesentlichen durch eine reversible Rück-Deformation von der Ringdichtung 9 hergestellt.

Ein Bremskolben 3 ist grundsätzlich topfförmig aufgebaut und umfasst einen Bremskolbenboden 11 und eine zylindrische Bremskolbenwandung 12. Je nach Scheibenbremstyp kann es vorgesehen sein, dass entweder der Bremskolbenboden 11 oder ein freier Rand der Bremskolbenwandung 12 den Reibbelag 7,8 direkt beaufschlagen.

Das Führungssystem 2 für einen erfindungsgemäßen Bremskolben 3 einer Kraftfahrzeugscheibenbremse 1, oder anderer Aktuatoren, umfasst eine konzentrisch sowie zylindrisch zum Bremskolben 3 arrangierte Bremskolbenbohrung 13 zur axial verschiebbaren Aufnahme vom Bremskolben 3 im Gehäuse 4 (insbesondere einem Bremssattelgehäuse), und eine im Bremssattelgehäuse gelagerte Ringdichtung 9 die elastisch zwischen der zylindrischen Bremskolbenwandung 12 und der Ausnehmung 10 der Bremskolbenbohrung 13 eingespannt ist, und den oben beschriebenen Funktionen dient.

Erfindungsgemäß ist in einem Spalt 14 zwischen Bremskolbenbohrung 13 und Bremskolbenwandung 12 ein Führungsmittel 15 reversibel elastisch eingespannt vorgesehen, welches am Bremssattelgehäuse abgestützt ist, und den Bremskolben 3 permanent in Radialrichtung mit einer definierten Kraftwirkung derart einspannt, dass die Bremskolbenwandung 12 gezielt gerichtet mit der Bremskolbenbohrungswandung gekoppelt ist. Demzufolge ergibt sich eine gerichtete Aufnahme vom Bremskolben 3 in dem Gehäuse 4. Erfindungsgemäß wird durch ein definiert elastisch-nachgiebig einspannendes Führungsmittel 15 eine verbesserte Einkopplung von Querkräften in das Gehäuse 4 erzielt.

Bei einer besonders bevorzugten Ausgestaltung der Erfindung ist zwecks Verringerung von Montage und Zerspanungsaufwand vorgesehen, Führungsmittel 15 einschließlich Ringdichtung 9 einstückig auszubilden, und in einer gemeinsamen Ausnehmung von der Bremskolbenbohrung 13 anzuordnen. Sofern Zerspanungs- und Montageaufwand untergeordnet sind, und separierte Austauschbarkeit gewünscht ist, können Führungsmittel 15 und Ringdichtung 9 als gesonderte Bauteile nebeneinander ausgebildet und aufgenommen sein. Dazu sind Führungsmittel 15 und Ringdichtung 9 in axialem Abstand zueinander in jeweils gesonderten Ausnehmungen 10, 16 der Bremskolbenbohrung 13 platziert. Die Ausnehmungen 10, 16 können Fixiermittel wie insbesondere parallele Anlageflächen 17, 18 für Ringdichtung 9 und Führungsmittel 15 aufweisen. Prinzipiell bietet es sich an, das Führungsmittel 15 mit einer über den Brems-kolbenumfang gleichmäßigen Einspannkraft zu versehen. Dadurch ergibt es sich im Gebrauch automatisch, dass die Bremskolbenachse A im Wesentlichen orthogonal zu den Reibflächen der Bremsscheibe 6 vorgesehen ist.

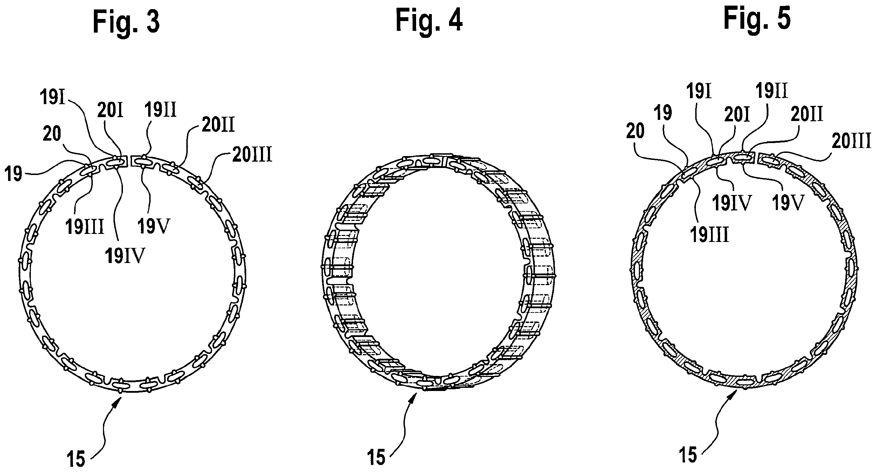

Die Erfindung ermöglicht des Weiteren eine besondere, alternative Gestaltung wobei zwischen Bremskolbenbohrung 13 und Bremskolbenwandung 12 ein abgedichteter Spalt 14 verläuft, und die Bremskolbenachse A nicht orthogonal zur Reibfläche der Bremsscheibe 6 sondern definiert schiefwinklig angestellt vorgesehen ist. Dies wird bei einer Ausführungsform der Erfindung erhalten, indem eine radiale Kraftwirkung einer Einspannung der Bremskolbenwandung 12 über den Bremskolbenumfang ungleichmäßig vorgesehen ist, und sich die Querkräfte nicht gegenseitig neutralisieren. Dazu ist dem Bremskolben 3 im Ergebnis eine definierte Querkraft mit einer entsprechend resultierenden Vorzugsorientierung aufgeprägt, wobei die erzielte Anstellrichtung mit der Kraftrichtung von der resultierenden Querkraft übereinstimmt. Die derart ungleichmäßig am Bremskolbenumfang verteilte Kraftwirkung zur Bewirkung eines Anstellwinkels kann durch entsprechende Adaption einer Werkstoffelastizität von dem Führungsmittel 15 erhalten werden. Demzufolge wird gemäß Fig. 3-5 ein Quer-schnitt vom Führungsmittel 15 in einem bevorzugten Verlagerungsbezirk gezielt nachgiebig weichelastisch ausgelegt, beispielsweise durch radial konvex vorstehende, erhabene Rippen 19, Nocken oder ähnliche Vorsprünge sowie wenigstens eine entsprechend zugeordnete integrale Kavität 20. Durch die Kavität 20 wird die nötige elastische Bewegungsfreiheit ermöglicht. Im Übrigen wird dem Bremskolben 3 eine radiale Querkraft aufgeprägt und gegebenenfalls ein vorgegebener, gewünschter, Anstellwinkel α erteilt. Bevorzugt erstrecken sich die einzelnen Rippen 19 oder Nocken mehr lang als dick sowie einheitlich in Axialrichtung verlaufend, also parallel zur Bremskolbenachse A ausgerichtet. Die Höhe der Rippen 19 definiert in diesem Zusammenhang, in Abstimmung mit dem Außendurchmesser der Bremskolbenwandung 12 und dem Innendurchmesser der Bremskolbenbohrung 13 die radiale Einspannung vom Bremskolben 3.

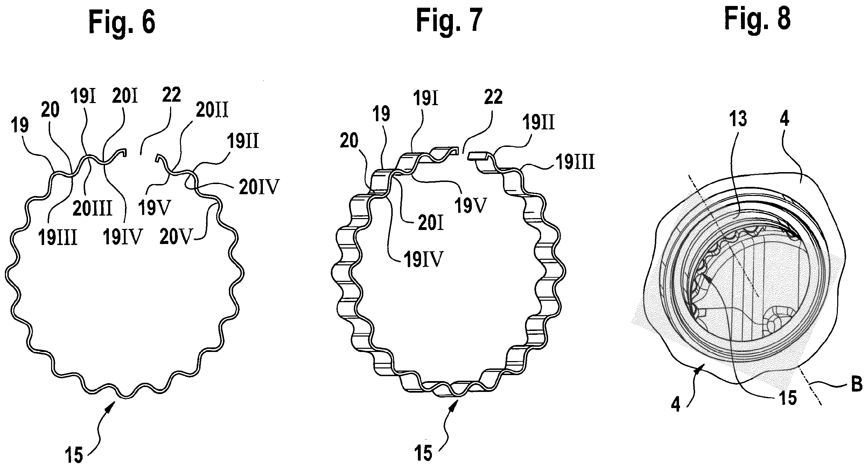

Ein gesondertes Führungsmittel 15 kann in einer schlichten Variante nach Fig. 6 - 8 als einfacher Wellring aus einem Vollwerkstoff (beispielsweise Federstahl) mit einheitlicher Wandstärke ausgebildet sein, dessen Querschnitt mäanderförmig ist, und über abwechselnd konvexe sowie konkave Abschnitte verfügt. Dem ist eine entsprechend angepasste koaxial-zylindrische Bremskolbenwandung und eine koaxial-zylindrische Bremskolbenbohrung 13 zugeordnet. Alternativ oder ergänzend dazu bietet sich eine andere Variante bei der das Führungsmittel als Bügelfeder mit wenigstens einem federnden Arm ausgebildet ist.

Weiterhin alternativ oder ergänzend ist es denkbar, die jeweiligen Nutaufnahmen für Ringdichtung und/oder Führungsmittel im Gehäuse deaxiert - also mit Achsversatz Δ in Bezug auf die Kolbenbohrung - vorzusehen. Weiterhin alternativ oder ergänzend ist es denkbar, Ringdichtung und/oder Führungsmittel exzentrisch auszubilden. Weiterhin alternativ oder ergänzend ist es möglich, Ringdichtung 9 und/oder Führungsmittel 15 aus unterschiedlich elastisch ausgebildetem Werkstoff vorzusehen. Es ist möglich, dass das elastische Führungsmittel 15 wenigstens einen zumindest teilweise aus einem Metallwerkstoff wie insbesondere aus Federstahl gebildeten Bestandteil aufweist. Es ist insbesondere möglich, bezogen auf den Azimutwinkel (Az), abwechselnd unterschiedliche Elastizitäten/E-Moduli vorzusehen. Dies ist beispielsweise durch den oben genannten Werkstoffverbund und/oder eine andere elastomere Mehrmerkstoffbauweise ermöglicht.

Alternativ oder ergänzend kann die auf den Bremskolben 3 am Umfang umlaufende, insbesondere radial gerichtete, elastische Druckmodulation dadurch erhalten werden, dass eine Ausnehmung 10, 16 zur Aufnahme von Ringdichtung 9 und oder Führungsmittel 15 mit einer profilierten Grundfläche 40 versehen wird, indem am Umfang von der Grundfläche 40 wenigstens eine oder mehrere Unregelmäßigkeiten vorgesehen sind. Die Unregelmäßigkeit kann als sektorielle Abflachung, Protuberanz, Aussparung oder sonstige Deformation von der Grundfläche 40 ausgebildet sein, um durch entsprechend veränderte Aufnahme und Einwirkung von Ringdichtung 9 und/oder Führungsmittel 15 entsprechend veränderte, modulierte Federwirkungen zu erhalten, die am Umfang umlaufend die gewünschte und grundsätzlich radial gerichtete Druckmodulation auf den Kolben 3 bewirken. Dementsprechend ist/sind die Unregelmäßigkeit/en in der Grundfläche 40 bevorzugt radial gerichtet vorgesehen und können bevorzug als Radiusänderungen gestaltet sein, so dass die Grundfläche als nicht kreisförmige, elliptische, ovoloide oder sonstwie um den Bremskolben 3 geschlossene Freiformkurve verläuft. Durch die besagte Druckmodulation kann somit die in Fig. 12 A-D beispielhaft und prinzipiell dargestellte Punkt- und/ oder Linenberührung im *-Punkt zwischen Bremskolbenwandung 12 und Bremskolbenbohrungswandung - ggf. unter Erhalt von dem beschriebenen Anstellwinkel α (Winkel zwischen Bremskolbenachse A und Bohrungsachse im Gehäuse 4) - erzielt werden.

Weiterhin bevorzugt ist das erfindungsgemäße ringförmige Führungsmittel 15 ganz oder zumindest teilweise aus einem Kunststoffwerkstoff, wie insbesondere aus PTFE-Kunststoff oder einem PTFE-Bestandteil ausgebildet. Das Führungsmittel 15 ist besonders bevorzugt ringförmig gestaltet wobei wenigstens ein Ventilationskanal 21 - gewissermaßen als Bypass - zwecks Druckausgleich sowie zum Rückfluss von Druckmittel (Bremsflüssigkeit) in den Druckraum 5 vorgesehen ist. Jeder Ventilationskanal 21 kann als radialer oder schräg am ringförmigen Führungsmittel 15 vorgesehener Schlitz 22 gestaltet sein. Es ist möglich, dass das Führungsmittel 15 in seiner Wandung (insbesondere nach radial innen und nach radial außen offene) zusätzliche Kanäle zur besseren elastischen Verformung sowie zwecks Druckausgleich aufweist. Es ist möglich, das Führungsmittel 15 als Verbundkörper aus mehreren Kunststoffwerkstoffen in Schichten und/oder mit starren Trägerteilen auszubilden, um unterschiedliche Werkstoffeigenschaften zur Optimierung der Bauteileigenschaften auszunutzen.

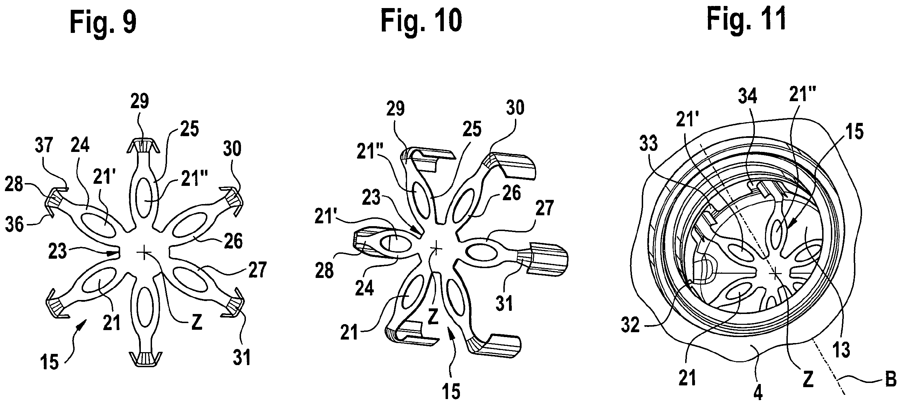

Eine besondere Variante eines Führungsmittels nach Fig. 9-11 besteht darin, dass es als federelastische Klammer 23 mit mehreren sternförmig von einem Zentrum Z ausgehenden Armen 24,25,26,27 einschließlich freien Enden ausgebildet ist, und wobei die Arme 24-27 zur Lagesicherung in Aufnahmevertiefungen 32-35 vom Bremssattelgehäuse aufgenommen sind und wobei die freien Enden 28-31 der Klammer 23 jeweils ein oder mehrere Arme 36,37 zur Auflage am Umfang vom Bremskolben 3 aufweisen. Dabei sitzen die Arme 36,37 bevorzugt regelmäßig verteilt am Umfang intermittierend von radial außen elastisch federnd auf der Wandung vom Bremskolben 3 auf und spannen dadurch den Bremskolben 3 ein.

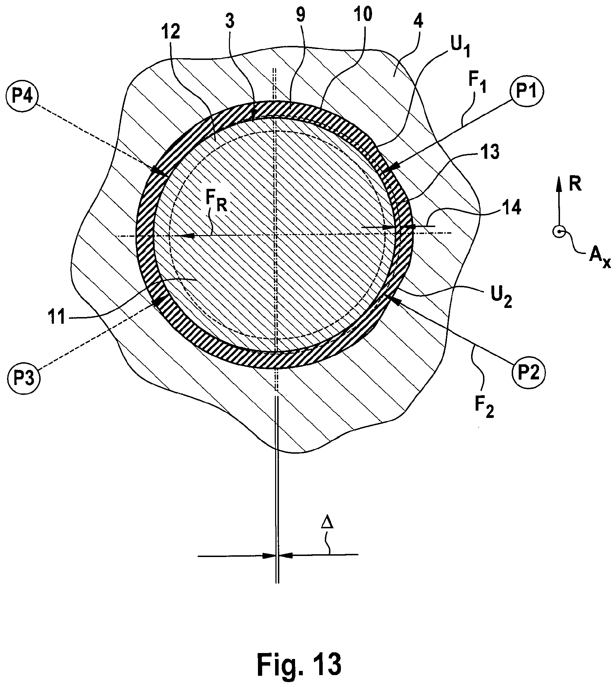

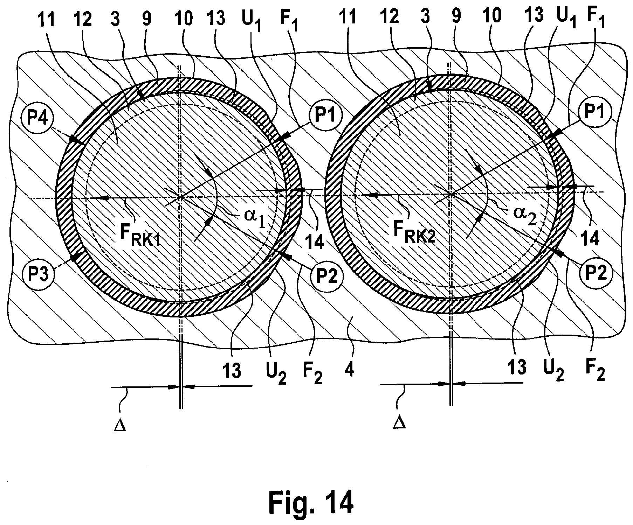

Eine besonders bevorzugte Ausführungsform der Erfindung anhand einer Ringdichtung 9 ist in Fig. 13 verdeutlicht, wobei übereinstimmende Merkmale mit übereinstimmenden Bezugsziffern gekennzeichnet sind. Die Fig. 14 beschreibt dabei beispielhaft eine Zweikolbenapplikation wobei Kₙ jeweils den jeweiligen Kolben symbolisiert. Sämtliche Ausführungsformen sehen kombinatorisch mehrere Lösungsmerkmale vor. Die Bezugsziffer 14 bezeichnet darin in der Paarung jeweils ein radial gemessenes, maximales Spiel zwischen Bremskolbenwandung 12 und Bremskolbenbohrung 13 im Gehäuse 4. Zudem ist die Nut 10 in Radialrichtung R zur Bohrungsachse B um den ausdrücklichen Versatz Δ deaxiert im Gehäuse 4 platziert arrangiert. Zudem verfügt die Nut 10 über mehrere, am Umfang zueinander mit Winkel α von beispielsweise etwa ≈60 ° versetzt platzierte, periphere Unregelmäßigkeiten (Abplattungen) U₁-Uₙ an Ihrer grundsätzlich ringförmig umlaufenden Grundfläche 40. Die Unregelmäßigkeiten U erzeugen unter Kooperation mit der eingespannten Ringdichtung 9 und der Bremskolbenwandung 12 eine zugehörige radial gerichtete Kraft F₁-F_{N}. Durch Kräfteaddition resultiert daraus eine radial in 9-Uhr-Position gerichtet resultierende Kraftkomponente F_{R} was auch teilweise auch in der Fig. 12 verdeutlicht ist. Zur zusätzlichen Verstärkung dieser modalakustisch wirksamen Verstimmung innerhalb der Bremskolbenführung ist es sinnvoll, weitere Lösungsmerkmale hinzuzukombinieren, oder auszutauschen, um dem Bremskolben 3 in modaler Abstimmung gezielt eine radial gerichtete Vorzugsorientierung in Richtung Bohrungswandung zu erteilen. Folglich ist die Bremskolbenwandung 12 entsprechend der resultierenden Kraftkomponente FR einerseits in besonders effektiver Weise modalakustisch gerichtet mit der Bohrungswandung vom Gehäuse 4 gekoppelt. Dabei versteht sich, dass die einseitig verstärkte Ankopplung zwischen Bremskolbenwandung 12 und Bremskolbenbohrung 13 gegenüberliegend eine verstärkte Entlastung bzw. Entkopplung bewirkt.

In Hinblick auf die gezeigten Ausführungen nach Fig. 13 und 14 ist für jeden Kolben 3 jeweils eine übereinstimmend einheitliche Winkelorientierung von der Unregelmäßigkeit U 1, U2 bei P1 und P2 dargelegt, so dass sich auch eine einheitlich gerichtete Resultierende ergibt. Unter Rückgriff auf Positionangaben nach dem Vorbild eines gedachten, anlogen Uhren-Ziffernblatts ist U1 dabei jeweils übereinstimmen mit Platzierung P1 etwa in einer 14-Uhr-Stellung vorgesehen, und U2 befindet sich in Platzierung bei P2 jeweils etwa in einer 16-Uhr-Stellung, immer bezogen aufs Zentrum vom jeweiligen Bremskolben 3. Unter Detailabstimmung des modalakustischen Verhaltens einer Fahrzeugbremse kann diese Winkelorientierung abgewandelt sein. So ist es für bestimmte abgewandelte Anwendungsfällte beispielsweise denkbar, sinnvoll sowie möglich die Positionierung P gezielt in Richtung P3, P4 abzuändern, um die Richtung der Resultierenden FR abzuändern. So kann bei Zweikolbenapplikation beispielsweise ein links angeordneter Kolben 3 beispielsweise aus Richtung von Position P3 entsprechend 8-Uhr-Stellung sowie aus Richtung von P4 entsprechend der 10-Uhr-Stellung beaufschlagt werden. Dadurch wird der vorteilhafte Effekt erzielt, dass sich die Resultierenden F_{RK1} und F_{RK2} gegenseitig neutralisieren. Diese Variations- und Platzierungsmöglichkeiten sind für 3-Kolbenanordnungen natürlich nochmals erhöht, ohne jedoch den Kerngedanken der Erfindung in Frage zu stellen.

### Bezugszeichenliste

- 1: Kraftfahrzeugscheibenbremse
- 2: Führungssystem
- 3: Bremskolben
- 4: Gehäuse
- 5: Druckraum
- 6: Bremsscheibe
- 7: Reibbelag
- 8: Reibbelag
- 9: Ringdichtung
- 10: Ausnehmung/Nut
- 11: Bremskolbenboden
- 12: Bremskolbenwandung
- 13: Bremskolbenbohrung
- 14: Spalt
- 15: Führungsmittel
- 16: Ausnehmung
- 17: Anlagefläche
- 18: Anlagefläche
- 19: Rippe
- 20: Ausnehmung
- 21: Ventilationskanal
- 22: Schlitz
- 23: Klammer
- 24: Arm
- 25: Arm
- 26: Arm
- 27: Arm
- 28: freies Ende
- 29: freies Ende
- 30: freies Ende
- 31: freies Ende
- 32: Aufnahmevertiefung
- 33: Aufnahmevertiefung
- 34: Aufnahmevertiefung
- 35: Aufnahmevertiefung
- 36: Arme
- 37: Arme
- 38: Kralle
- 39:
- 40, 40': Grundfläche (von Nut/Aufnahme)

- A, A': Bremskolbenachse
- Ax: axial
- B: Bohrungsachse (im Gehäuse 4)
- R: radial
- T: tangential
- Az: azimutär (am Umfang)
- Δ: Deaxierung
- α: Winkel
- U₁-Uₙ: Unregelmäßigkeit
- F₁-Fₙ: Kraft
- F_{R}: resultierende Kraft (in Bezug auf den Bremskolben)
- K1: Kurzkennzeichen für Kolben No. 1 (linksseitig)
- K2: Kurzkennzeichen für Kolben No. 2 (rechtsseitig)
- P1-PN: (Winkel-)Position auf einem gedachten Uhr-Ziffernblatt

## Patentansprüche

1. Führungssystem für einen Bremskolben (3) einer Kraftfahrzeugscheibenbremse (1) umfassend einen Bremskolben (3), umfassend eine Bremskolbenbohrung (13) zur axial relativverschiebbaren Aufnahme vom Bremskolben (3) in einem Gehäuse (4), und umfassend ein Führungsmittel (15), das elastisch zwischen einer zylindrischen Bremskolbenwandung (12) und einer Nut (10) in der Bremskolbenbohrung (13) eingespannt ist, und mit Dichtungsmittel, **dadurch gekennzeichnet, dass** der Bremskolben (3) vom Führungsmittel (15) in Radialrichtung R mit einer definierten Querkraftwirkung gerichtet beaufschlagt in der Bremskolbenbohrung (13) reversibel elastisch eingespannt ist, um die Bremskolbenwandung (12) modalakustisch gerichtet mit der Bremskolbenbohrung (13) zu koppeln, indem die durch das Führungsmittel (15) in der Radialrichtung auf den Bremskolben (3) aufgebrachte Kraftwirkung über einen Bremskolbenumfang derart asymmetrisch, ungleich, verteilt ist, dass eine resultierende Querkraft dem Bremskolben (3) in Relation zur Bremskolbenbohrung (13) eine Vorzugsorientierung und/oder einen vorgegebenen Anstellwinkel aufprägt.

2. Führungssystem nach Anspruch 1, **dadurch gekennzeichnet, dass** ein Führungsmittel (15) und eine Ringdichtung (9) in einer Nut (10) von der Bremskolbenbohrung (13) angeordnet sind.

3. Führungssystem nach Anspruch 1, **dadurch gekennzeichnet, dass** Führungsmittel (15) und eine Ringdichtung (9) als zueinander gesonderte Bauteile ausgebildet sind.

4. Führungssystem nach Anspruch 1, **dadurch gekennzeichnet, dass** ein Führungsmittel (15) und eine Ringdichtung (9) in axialem Abstand zueinander in gesonderten Ausnehmungen (10, 16) in der Bremskolbenbohrung (13) angeordnet sind.

5. Führungssystem nach Anspruch 4, **dadurch gekennzeichnet, dass** die Ausnehmungen (10, 16) Fixiermittel wie insbesondere Anlageflächen (17, 18) für die Ringdichtung (9) und das Führungsmittel (15) aufweisen.

6. Führungssystem nach Anspruch 2, **dadurch gekennzeichnet, dass** das Führungsmittel (15) wenigstens einen zumindest teilweise aus einem Kunststoffwerkstoff wie insbesondere aus PTFE-Kunststoff gebildeten Bestandteil aufweist.

7. Führungssystem nach Anspruch 1, **dadurch gekennzeichnet, dass** das Führungsmittel (15) an seinem Umfang verteilt mehrere konvexe Vorsprünge wie Rippen (19) und/oder Ausnehmungen (20) aufweist.

8. Führungssystem nach Anspruch 1, **dadurch gekennzeichnet, dass** das Führungsmittel (15) mit wenigstens einem Ventilationskanal (21) oder Schlitz (22) zum Druckausgleich sowie zur Rückführung von Druckmittel in einen Druckraum (5) versehen ist.

9. Führungssystem nach Anspruch 1, **dadurch gekennzeichnet, dass** das Führungsmittel (15) einen oder mehrere Arme (24-27) aufweist, welche federnd zwischen Gehäuse (4) und Bremskolben (3) eingespannt ist/sind.

10. Führungssystem nach Anspruch 9, **dadurch gekennzeichnet, dass** das Führungsmittel (15) als elastische Klammer (23) mit mehreren radial sternförmig von einem Zentrum Z ausgehenden Armen (24-27) mit freien Enden (28-31) ausgebildet ist, wobei die Arme (24-27) in Aufnahmevertiefungen (32-35) vom Gehäuse (4) aufgenommen sind und wobei die freien Enden (28-31) zusätzlich jeweils ein oder mehrere Federmittel wie insbesondere Krallen (38) zur Auflage auf der Bremskolbenwandung (12) aufweisen.

11. Führungssystem nach Anspruch 1, **dadurch gekennzeichnet, dass** das Führungsmittel (15) und/oder die Ringdichtung (9) exzentrisch ausgebildet ist/sind.

12. Führungssystem nach einem oder mehreren der Ansprüche 1-11, **dadurch gekennzeichnet, dass** die Nut (10) zur Aufnahme von Führungsmittel (15) und/oder Ringdichtung (9) mit einer Deaxierung Δ in Radialrichtung R versetzt zu der Bohrungsachse B angeordnet ist.

13. Führungssystem nach einem oder mehreren der Ansprüche 1-12, **dadurch gekennzeichnet, dass** das Führungsmittel (15) und/oder die Ringdichtung (9) aus elastomerem Werkstoff mit wenigstens zwei unterschiedlich nachgiebig dimensionierten Elastizitätsmodulen ausgebildet ist, und wobei die unterschiedlichen Elastizitätsmodule am Umfang (azimutär, Az) abwechselnd vorgesehen sind.

14. Führungssystem nach einem oder mehreren der Ansprüche 1-13, **dadurch gekennzeichnet, dass** die Nut/Ausnehmung (10, 16) mit einer profilierten Anlagefläche versehen ist, die wenigstens eine Grundfläche (40, 40') mit einer Unregelmäßigkeit U umfasst.

15. Führungssystem nach Anspruch 14, **dadurch gekennzeichnet, dass** die Unregelmäßigkeit als sektorielle Abflachung, Protuberanz, Aussparung oder sonstige Deformation von der Grundfläche (40, 40') ausgebildet ist, um durch entsprechend formschlüssige Einwirkung auf Ringdichtung (9) und/oder Führungsmittel (15) am Umfang umlaufend eine radial gerichtete Druckmodulation auf den Kolben (3) zu erhalten.

16. Führungssystem nach Anspruch 15, **dadurch gekennzeichnet, dass** die Unregelmäßigkeit als radial gerichtete Radiusänderung der Ausnehmung (10, 16) vorgesehen ist.

17. Führungssystem nach Anspruch 14, 15 oder 16, **dadurch gekennzeichnet, dass** die Nut (10) mehrere, zueinander im Winkel α am Umfang versetzt arrangierte, Unregelmäßigkeiten U1-Un aufweist.

18. Führungssystem nach einem oder mehreren der vorhergehenden Ansprüche 14-17, **dadurch gekennzeichnet, dass** die Platzierung (P1, P2, P3, P4) der Unregelmäßigkeit (U1-Un) am Umfang vom Bremskolben (3) eine resultierende Querkraft Fr erzeugt.

## Claims

1. Guiding system for a brake piston (3) of a motor vehicle disk brake (1), comprising a brake piston (3), comprising a brake piston bore (13) for accommodating the brake piston (3) in a housing (4) in such a way that said brake piston is axially displaceable relative thereto, and comprising a guide means (15), which is elastically clamped between a cylindrical brake piston wall (12) and a groove (10) in the brake piston bore (13), and having sealing means, **characterized in that** the brake piston (3) is reversibly elastically clamped in the brake piston bore (13) by the guide means (15), impelled in a radial direction R by a defined action of lateral forces, in order to afford the brake piston wall (12) a directed modal-acoustic coupling to the brake piston bore (13), by virtue of the action of forces applied to the brake piston (3) by the guide means (15) in a radial direction being distributed asymmetrically unequally over a brake piston circumference, in such a way that a resultant lateral force impresses a preferred orientation and/or a predefined setting angle on the brake piston (3) in relation to the brake piston bore (13).

2. Guiding system according to Claim 1, **characterized in that** a guide means (15) and a sealing ring (9) are arranged in a groove (10) of the brake piston bore (13) .

3. Guiding system according to Claim 1, **characterized in that** a guide means (15) and a sealing ring (9) are formed as separate components from another.

4. Guiding system according to Claim 1, **characterized in that** a guide means (15) and a sealing ring (9) are arranged at an axial interval from one another in separate recesses (10, 16) in the brake piston bore (13) .

5. Guiding system according to Claim 4, **characterized in that** the recesses (10, 16) comprise fixing means, such as, in particular, bearing faces (17, 18) for the sealing ring (9) and the guide means (15).

6. Guiding system according to Claim 2, **characterized in that** the guide means (15) comprises at least one component formed at least partially from a plastic material such as, in particular, PTFE plastic.

7. Guiding system according to Claim 1, **characterized in that** the guide means (15) comprises multiple convex projections such as ribs (19) and/or recesses (20) distributed over its circumference.

8. Guiding system according to Claim 1, **characterized in that** the guide means (15) is provided with at least one ventilation duct (21) or aperture (22) for the equalization of pressure and for returning fluid into a pressure chamber (5).

9. Guiding system according to Claim 1, **characterized in that** the guide means (15) comprises one or more arms (24-27), which is/are resiliently clamped between the housing (4) and the brake piston (3).

10. The guiding system according to Claim 9, **characterized in that** the guide means (15) is formed as an elastic clip (23) having multiple arms (24-27) radiating radially from a center Z with free ends (28-31), wherein the arms (24-27) are accommodated in fixing depressions (32-35) of the housing (4), and wherein the free ends (28-31) each additionally comprise one or more spring means such as, in particular, claws (38) for resting on the brake piston wall (12) .

11. Guiding system according to Claim 1, **characterized in that** the guide means (15) and/or the sealing ring (9) is/are formed eccentrically.

12. Guiding system according to one or more of Claims 1-11, **characterized in that** the groove (10) for accommodating the guide means (15) and/or the sealing ring (9) is arranged offset with an axial offset Δ in a radial direction R relative to the bore axis B.

13. Guiding system according to one or more of Claims 1-12, **characterized in that** the guide means (15) and/or the sealing ring (9) is formed from elastomer material having at least two moduli of elasticity designed for differing pliability, and wherein the different moduli of elasticity are provided alternately on the circumference (azimuthal, Az).

14. Guiding system according to one or more of Claims 1-13, **characterized in that** the groove/recess (10, 16) is provided with a profiled bearing surface, which comprises at least one base surface (40, 40') having an irregularity U.

15. Guiding system according to Claim 14, **characterized in that** the irregularity is formed as a sectoral flattening, protuberance, recess or other deformation of the base surface (40, 40') in order to obtain a radially directed pressure modulation on the piston (3) orbitally at the circumference though correspondingly interlocking action on the sealing ring (9) and/or guide means (15).

16. Guiding system according to Claim 15, **characterized in that** the irregularity is provided as a radially directed variation in the radius of the recess (10, 16).

17. Guiding system according to Claim 14, 15 or 16, **characterized in that** the groove (10) comprises multiple irregularities U1-Un staggered by an angle α at the circumference.

18. Guiding system according to one or more of the preceding Claims 14-17, **characterized in that** the location (P1, P2, P3, P4) of the irregularity (U1-Un) produces a resultant lateral force Fr at the circumference of the brake piston (3).

## Revendications

1. Système de guidage pour un piston de frein (3) d'un frein à disque de véhicule automobile (1) comportant un piston de frein (3), comportant un alésage de piston de frein (13) servant à loger de manière mobile relativement axialement le piston de frein (3) dans un boîtier (4), et comportant un moyen de guidage (15) qui est serré élastiquement entre une paroi cylindrique de piston de frein (12) et une rainure (10) dans l'alésage de piston de frein (13), et comprenant des moyens d'étanchéité, **caractérisé en ce que** le piston de frein (3) est serré élastiquement de manière réversible dans l'alésage de piston de frein (13) par le moyen de guidage (15) de manière soumise à l'action d'une force transversale définie de façon orientée dans la direction radiale R, afin de coupler la paroi de piston de frein (12) à l'alésage de piston de frein (13) de manière orientée de façon modale acoustique, par le fait que l'action de force appliquée dans la direction radiale sur le piston de frein (3) par le moyen de guidage (15) est répartie de manière non uniforme et de manière asymétrique sur une périphérie de piston de frein de telle sorte qu'une force transversale résultante impose au piston de frein (3), par rapport à l'alésage de piston de frein (13), une orientation préférée et/ou un angle d'inclinaison prédéfini.

2. Système de guidage selon la revendication 1, **caractérisé en ce qu'**un moyen de guidage (15) et un joint d'étanchéité annulaire (9) sont disposés dans une rainure (10) de l'alésage de piston de frein (13) .

3. Système de guidage selon la revendication 1, **caractérisé en ce qu'**un moyen de guidage (15) et un joint d'étanchéité annulaire (9) sont réalisés sous forme de pièces séparées l'une de l'autre.

4. Système de guidage selon la revendication 1, **caractérisé en ce qu'**un moyen de guidage (15) et un joint d'étanchéité annulaire (9) sont disposés à une distance axiale l'un de l'autre dans des évidements séparés (10, 16) dans l'alésage de piston de frein (13) .

5. Système de guidage selon la revendication 4, **caractérisé en ce que** les évidements (10, 16) comprennent des moyens de fixation tels qu'en particulier des surfaces d'appui (17, 18) pour le joint d'étanchéité annulaire (9) et le moyen de guidage (15).

6. Système de guidage selon la revendication 2, **caractérisé en ce que** le moyen de guidage (15) comprend au moins un élément constitutif formé au moins partiellement à partir d'une matière synthétique telle qu'en particulier une matière synthétique en PTFE.

7. Système de guidage selon la revendication 1, **caractérisé en ce que** le moyen de guidage (15) comprend, de manière répartie sur sa périphérie, plusieurs saillies convexes telles que des nervures (19) et/ou des évidements (20).

8. Système de guidage selon la revendication 1, **caractérisé en ce que** le moyen de guidage (15) est doté d'au moins un canal de ventilation (21) ou d'une fente (22) pour l'équilibrage de pression ainsi que pour la recirculation de fluide sous pression dans une chambre de pression (5).

9. Système de guidage selon la revendication 1, **caractérisé en ce que** le moyen de guidage (15) comprend un ou plusieurs bras (24-27), le(s)quel(s) est/sont serré (s) de manière élastique entre le boîtier (4) et le piston de frein (3).

10. Système de guidage selon la revendication 9, **caractérisé en ce que** le moyen de guidage (15) est réalisé sous forme d'attache élastique (23) dotée de plusieurs bras (24-27) partant radialement en forme d'étoile d'un centre Z, lesquels bras sont dotés d'extrémités libres (28-31), les bras (24-27) étant logés dans des évidements de logement (32-35) du boîtier (4) et les extrémités libres (28-31) comprenant en outre respectivement un ou plusieurs moyens ressorts tels qu'en particulier des griffes (38) destinées à reposer sur la paroi de piston de frein (12).

11. Système de guidage selon la revendication 1, **caractérisé en ce que** le moyen de guidage (15) et/ou le joint d'étanchéité annulaire (9) est/sont réalisé(s) de manière excentrique.

12. Système de guidage selon l'une ou plusieurs des revendications 1 à 11, **caractérisé en ce que** la rainure (10) est, pour recevoir le moyen de guidage (15) et/ou le joint d'étanchéité annulaire (9), disposée de manière décalée par rapport à l'axe d'alésage B d'un décalage Δ dans la direction radiale R.

13. Système de guidage selon l'une ou plusieurs des revendications 1 à 12, **caractérisé en ce que** le moyen de guidage (15) et/ou le joint d'étanchéité annulaire (9) sont formés à partir d'une matière élastomère présentant au moins deux modules d'élasticité dimensionnés de manière à présenter une souplesse différente, et les modules d'élasticité différents étant prévus de manière alternée sur la périphérie (azimut, Az).

14. Système de guidage selon l'une ou plusieurs des revendications 1 à 13, **caractérisé en ce que** la rainure/l'évidement (10, 16) est doté(e) d'une surface d'appui profilée qui comporte au moins une surface de base (40, 40') dotée d'une irrégularité U.

15. Système de guidage selon la revendication 14, **caractérisé en ce que** l'irrégularité est réalisée en tant qu'aplatissement, protubérance, évidement ou autre déformation sectoriel(le) de la surface de base (40, 40'), afin d'obtenir une modulation de pression, orientée radialement, sur le piston (3) sur la périphérie par effet de complémentarité de forme de manière correspondante sur le joint d'étanchéité annulaire (9) et/ou le moyen de guidage (15) .

16. Système de guidage selon la revendication 15, **caractérisé en ce que** l'irrégularité est prévue en tant que changement de rayon, orienté radialement, de l'évidement (10, 16).

17. Système de guidage selon la revendication 14, 15 ou 16, **caractérisé en ce que** la rainure (10) comprend plusieurs irrégularités U1-Un agencées de manière décalée d'un angle α les unes par rapport aux autres sur la périphérie.

18. Système de guidage selon l'une ou plusieurs des revendications précédentes 14 à 17, **caractérisé en ce que** le placement (P1, P2, P3, P4) de l'irrégularité (U1-Un) sur la périphérie du piston de frein (3) produit une force transversale résultante Fr.
